Europäisches Patentamt

European Patent Office

Office européen des brevets

(11) Veröffentlichungsnummer: **0 228 520 B1**

(12) **EUROPÄISCHE PATENTSCHRIFT**

(45) Veröffentlichungstag der Patentschrift: **03.04.91**

(51) Int. Cl.5: **C02F 1/40**, B01D 17/028, E03F 5/16, C02F 3/34

(21) Anmeldenummer: **86114414.5**

(22) Anmeldetag: **17.10.86**

(54) **Abscheider für insbesondere Fette aus Wässern.**

(30) Priorität: **08.01.86 DE 3600312**
**08.02.86 DE 3604011**

(43) Veröffentlichungstag der Anmeldung:
**15.07.87 Patentblatt 87/29**

(45) Bekanntmachung des Hinweises auf die Patenterteilung:
**03.04.91 Patentblatt 91/14**

(84) Benannte Vertragsstaaten:
**AT BE CH DE ES FR GB GR IT LI LU NL SE**

(56) Entgegenhaltungen:
DE-A- 3 423 587    FR-A- 328 403
FR-A- 589 316    GB-A- 1 600 791
US-A- 1 116 903    US-A- 4 288 545

(73) Patentinhaber: **Bauer, Herbert**
**Kirchstrasse 1**
**W-6452 Hainburg/Hessen(DE)**

Patentinhaber: **Bauer, Rita**
**Kirchstrasse 1**
**W-6452 Hainburg/Hessen(DE)**

(72) Erfinder: **Seelbach, Robert, Dipl.-Ing.**
**Kirchweg 9**
**W-5902 Netphen 3(DE)**
Erfinder: **Bauer, Herbert**
**Römerstrasse 1**
**W-6452 Hainburg(DE)**
Erfinder: **Nenninger, Manfred, Dipl.-Ing.**
**Im Kirschenfeld 29**
**W-6370 Ober-Ursel 5(DE)**

(74) Vertreter: **Schlagwein, Udo, Dipl.-Ing.**
**Anwaltsbüro Ruppert & Schlagwein Frankfurter Strasse 34**
**W-6350 Bad Nauheim(DE)**

## Beschreibung

Die Erfindung betrifft einen Abscheider für insbesondere Öle und Fette aus Wässern, vorzugsweise Abwässern, welcher einen vom zu behandelnden Wasser durchströmten Behälter mit einem Boden aufweist, der durch Trennwände in mehrere, hintereinander angeordnete, über Durchlässe in den Trennwänden miteinander in Verbindung stehenden Kammern aufgeteilt ist, deren erste einen Zulauf und deren letzte einen Ablauf aufweist.

Ein Abscheider der vorstehenden Art ist in der US-A-1 116 903 beschrieben. Der Abscheider nach dieser Veröffentlichung hat über seine gesamte Länge einen gleich großen, rechteckigen Querschnitt. Dadurch ist die Strömungsgeschwindigkeit in allen Kammern gleich.

In Fettabscheidern der vorstehenden Art schwimmen die im Vergleich zu Wasser spezifisch leichteren Fette und Öle zur Wasseroberfläche auf und können von dort entfernt werden. Größere Fetttröpfchen, Fettflocken und dergleichen lassen sich relativ leicht, schnell und vollständig ausscheiden; je feiner jedoch ein Fett- oder Öltröpfchen ist, desto ungünstiger wird sein Verhältnis des Widerstandes zum Auftrieb, so daß in vielen Fällen feinere Fett- bzw. Ölteilchen nicht oder nur mangelhaft ausgeschieden werden oder aber außerordentlich große Abscheider erforderlich werden, um durch lange Verweilzeiten ein ausreichendes Abscheiden zu sichern.

Wie beispielsweise die US-A-4 288 545 zeigt, ist es in der Abwassertechnik allgemein bekannt, dem Abwasser Fett oxidierende Bakterien beizumischen. Diese Bakterien können jedoch nur wirksam werden, wenn die Strömungsgeschwindigkeit des Abwassers im Behälter so gering ist, daß genügend Zeit zum Oxidieren der Fette und zum Aufschwimmen der Oxidationsprodukte zur Verfügung steht. Bei dem Fettabscheider nach der eingangs genannten US-A-1 116 903 läßt sich eine ausreichend große Verweilzeit nur verwirklichen, wenn der Flüssigkeitsdurchsatz gering oder der Behälter unerwünscht großvolumig ist.

Der Erfindung liegt die Aufgabe zugrunde, einen Abscheider der eingangs genannten Art zu entwickeln, der bei begrenzten Abmessungen in der Lage ist, relativ große Wasserströme weitgehend auch von kleinen Fetteilchen zu befreien.

Diese Aufgabe wird erfindungsgemäß dadurch gelöst, daß der Boden in Durchflußrichtung nach unten geneigt ist und der Zulauf oder die erste Kammer eine Dosiereinrichtung zur dosierten Zugabe von Fette oxidierenden Bakterien hat.

Durch diese Neigung des Bodens in Durchflußrichtung wird die Verweildauer des Abwassers im Abscheider von Kammer zu Kammer größer. Dadurch können in den hinteren Kammern besonders kleine Fetttröpfchen abgeschieden werden. Das Zugeben von Fette oxidierenden Bakterien wirkt sich durch den geneigten Boden besonders vorteilhaft aus, weil erst dadurch sich ausreichende Verweilzeiten in den hinteren Kammern für den Oxidationsprozeß und das Aufschwimmen der Oxidationsprodukte ergeben.

Die Hauptmenge der Oxidationsprodukte schwimmt in den letzten Kammern des Abscheiders auf der Oberfläche. Eine Teilmenge der Abfallstoffe der im Abscheider stattfindenden biologischen Fettumwandlung sinkt in den Kammern zum Boden hin ab und kann dort periodisch oder kontinuierlich entfernt werden. Die kontinuierliche Entfernung wird erforderlich, wenn aufgrund der Zusammensetzung des sich ansammelnden Schlammes Faulgase entstehen, welche die Bakterien absterben lassen. Um den Abscheider nicht durch Normalschlämme zusätzlich zu belasten, sollten durch Sedimentation abscheidbare Stoffe bereits in einem Vorabscheider abgeschieden werden.

Die Beimischung der Bakterien bewirkt, daß im Abscheider statt Fett, welches auf Sonderdeponien gebracht werden muß, ein die Umwelt nicht schädigendes oxidiertes Fett entsteht.

Die Durchlässe in den Trennwänden können verschiedenartig ausgebildet sein. Eine sehr einfache und funktionell vorteilhafte Ausbildung der Durchlässe besteht darin, daß die Trennwände durch vom Boden des Behälters aufsteigende Schwellwände und in Strömungsrichtung dahinter angeordnete, von der Füllhöhe bis unterhalb der Oberkante der Schwellwände, mit Abstand von den Schwellwänden geführte Trennflächen gebildet sind.

Eine vorteilhafte Ausgestaltung der Erfindung besteht darin, daß die Durchlässe der Trennwände im unteren Drittel der Trennwände vorgesehen sind. Dadurch verläuft die Strömung durch die Kammern in ihren unteren Bereichen, so daß darüber Bereiche entstehen, in denen die Oxidation der Fetteilchen und ihr Aufsteigen zur Oberfläche stattfinden kann.

Ebenfalls zur Bildung von Räumen mit äußerst geringer Strömung, in denen die Fettabscheidung erfolgt, trägt es bei, wenn die Durchlässe zum Boden des Behälters gerichtet sind.

Ein Mitreißen von Fetttröpfchen oder Feststoffen zum Ablauf hin wird vermieden, wenn der Ablauf eine unter der Füllhöhe vorgesehene Eintrittsöffnung hat. Hierdurch wird vor allem erreicht, daß oberhalb der Eintrittsöffnung sich keine zum Ablauf hin gerichtete Strömung ausbilden kann, durch die bereits zur Oberfläche aufgestiegene, oxidierte Fetttröpfchen in den Ablauf gelangen könnten.

Der Ablauf ist von oben her gut zu reinigen, wenn er ein Tauchrohr aufweist, welches fluchtend mit seinem eintauchenden Rohrstück ein nach oben bis über die Füllhöhe reichendes, durch einen Deckel verschlossenes Rohrstück hat.

Ein Absaugen des im Behälter befindlichen Abwassers bis zur Unterkante des Tauchrohres nach dem Winkelhebelprinzip kann auf einfache Weise vermieden werden, wenn das Tauchrohr mit einem bis unter die Füllhöhe reichenden Belüftungsrohr versehen ist.

Vorteilhaft ist es auch, wenn die Unterkante des Zulaufs über der die Füllhöhe bestimmenden Unterkante des Ablaufes angeordnet ist. Man kann dann das Einströmen des Abwassers leicht beobachten. Weiterhin gelangt durch diese Anordung des Zulaufs mit dem einströmenden Abwasser zusätzlich Luft in die Kammern des Abscheiders.

Um den Abscheider leicht reinigen zu können, ist es vorteilhaft, wenn der Behälter mehrere einen Zugang gewährende Domschächte hat.

Ein überströmen von Abwasser aus der ersten Kammer über die erste Trennwand hinweg in die zweite wird auf einfache Weise vermieden, wenn die die erste Kammer begrenzende Trennwand mindestens bis zur Unterkante des Zulaufes reicht.

Um die letzte, den Feinabscheider bildende Kammer zuverlässig vor einem Übertritt von auf der Oberfläche des Abwassers in der vorangehenden Kammer gesammeltem Fett zu schützen, ist es vorteilhaft, wenn die auslaßseitige Trennwand mindestens bis über die Oberkante des Ablaufes und damit deutlich über die Füllhöhe der Kammer reicht.

Ein Absaugen von aufsteigenden Fetttröpfchen wird vermieden, wenn vor der freien Eintrittsöffnung des Tauchrohres eine diese mit Abstand übergreifende Prallscheibe vorgeordnet ist.

Eine andere, insbesondere für die einlaßseitige Trennwand vorteilhafte Ausbildung der Durchflußöffnung besteht darin, daß die einlaßseitige Trennwand eine der zugeordneten Schwellwand vorgeordnete, bis über die Füllhöhe reichende Trennwandfläche hat, welche mit einen unteren, in Strömungsrichtung abgebogenen Abschnitt bis hinter die Schwellwand geführt ist.

In vielen Fällen fällt kurzfristig sehr heißes Abwasser an, beispielsweise in Fleischereibetrieben während des Spülens von Anlagen. Um während solcher Betriebsphasen ein Absterben der Bakterien durch zu hohe Temperaturen auszuschließen, ist es vorteilhaft, wenn der Zulauf einen Frischwasserzufluß zur dosierten Beimischung von Frischwasser in das zufließende Abwasser hat. Diese Zugabe von Frischwasser hat weiterhin den Vorteil, daß für die biologische Abwasserreinigung erforderlicher Sauerstoff mit dem Frischwasser ins Abwasser gelangt.

Zur Erreichung eines hohen Wirkungsgrades bei unterschiedlichen Betriebsbedingungen ist es vorteilhaft, wenn gemäß einer anderen Ausgestaltung der Erfindung der Behälter des Abscheiders eine Beheizung aufweist.

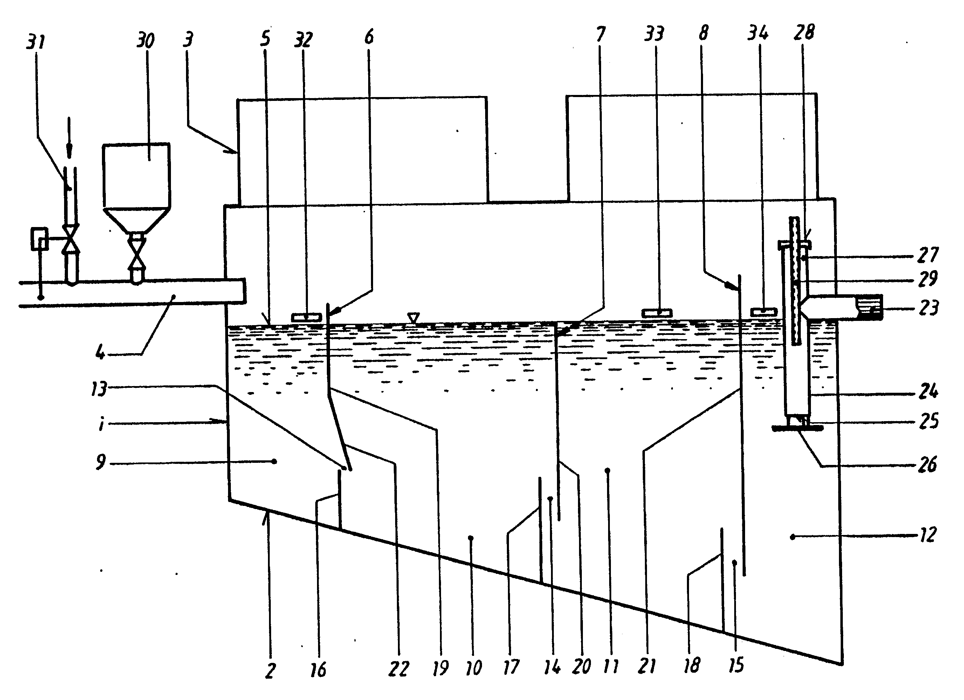

Die Erfindung läßt zahlreiche Ausführungsformen zu. Eine davon ist in der Zeichnung schematisch dargestellt und wird nachfolgend beschrieben. Die Zeichnung zeigt einen entlang seiner Mittelebene geführten Vertikalschnitt durch einen erfindungsgemäß gestalteten Abscheider.

Der nachfolgend beschriebene Abscheider ist zur biologischen Abwasserreinigung ausgebildet. Es sei jedoch angemerkt, daß bei weniger hohen Anforderungen der Abscheider auch ohne die für eine biologische Abwasserreinigung erforderlichen Einrichtungen arbeiten kann.

Der dargestellte Abscheider hat einen Behälter 1, der nach unten durch einen in Strömungsrichtung abfallenden Boden 2 abgeschlossen ist und der zwar nach oben auch verschlossen ist, zu Reinigungs- und Inspektionszwecken aber durch Domschächte 3 von oben her zugänglich ist. Diese Domschächte 3 werden im üblichen Betrieb durch begehbare und befahrbare Deckel abgedeckt und nur zu Reinigungs- und Inspektionszwecken geöffnet. Bewährt hat es sich, diese Domschächte 3 teleskopartig zweiteilig auszuführen, so daß unterschiedliche Höhen einstellbar sind und zusätzlich grobe Abstufungen durch unterschiedliche Längen der nicht dargestellten, aufzusetzenden Teile bestimmt werden.

Zu reinigende Wässer werden dem Behälter 1 über einen Zulauf 4 zugeführt, der oberhalb einer angestrebten Füllhöhe 5 im Behälter 1 vorgesehen ist. Wichtig für die Erfindung sind die nicht gezeigten, die Seitenwände des Behälters 1 miteinander verbindenden Trennwände 6, 7, 8, die den Behälter 1 in vier hintereinander vorgesehene Kammern 9, 10, 11, 12 aufteilen. Dabei handelt es sich bei der Kammer 9 um einen Vorabscheideraum, bei den Kammern 10 und 11 um Abscheideräume und bei der Kammer 12 um einen Feinabscheider. Jede Trennwand 6, 7, 8 hat im unteren Drittel ihrer Höhe bis zur Füllhöhe 5 jeweils einen Durchlaß 13, 14, 15, der so ausgebildet ist, daß der Flüssigkeitsstrom von einer zur anderen Kammer 9 -12 jeweils zum Boden 2 des Behälters 1 gerichtet ist. Das wird bei diesem Ausführungsbeispiel dadurch erreicht, daß jede Trennwand 6, 7, 8 aus einer auf dem Boden 2 stehenden Schwellwand 16, 17, 18 und einer nach oben hin zumindest bis zur Füllhöhe 5 reichenden Trennfläche 19, 20, 21 besteht. Die Trennflächen 20, 21 befinden sich in Strömungsrichtung gesehen etwas hinter den zugeordneten Schwellwänden 17, 18 und überlappen jeweils etwa 15% der jeweiligen Schwellwandhöhe. Dadurch bilden die Durchlässe 14, 15 nach unten gerichtete Spalte.

Die Trennfläche 19 ist geringfügig vor der zugeordneten Schwellwand 16 vorgesehen. Sie weist eine nach unten gerichtete Abknickung 22 auf, die bis etwas hinter der Schwellwand 16 verläuft und dadurch ebenfalls die Strömung von der Kammer 9 nach unten in die Kammer 10 richtet.

Um ein Überströmen der Trennfläche 19 zu vermeiden, ragt diese bis etwa der Unterkante des Einlaufs 4 über die Füllhöhe 5 hinaus. Hierzu im Gegensatz endet die Trennfläche 20 genau in Füllhöhe 5, während die Trennfläche 21 am weitesten aus dem Wasser ragt und nach oben hin bis über die Oberkante des Ablaufs 23 reicht. Dadurch ist die den Feinabscheider bildende Kammer 12 sicher gegen jedes in den Vorkammern abgeschiedene Fett abgeschirmt. Deshalb sammelt sich auf der Oberfläche des Wassers der Kammer 12 nur eine schwache Schicht oxidierten Fettes.

Die Füllhöhe 5 wird durch die Unterkante eines Ablaufes 23 bestimmt. Dieser Ablauf 23 hat ein in das Wasser eintauchendes Tauchrohr 24, dessen Eintrittsöffnung 25 derart tief unter der Füllhöhe 5 liegt, daß die Entnahme des Wassers nicht nahe der Füllhöhe 5 erfolgt. Gegen aufsteigende Fetttröpfchen ist die Eintrittsöffnung 25 durch eine ihr mit Abstand vorgeordnete Prallscheibe 26 gesichert.

Fluchtend zum das Tauchrohr 24 bildenden Rohrstück ist ein Rohrstück 27 vorgesehen, welches bis oberhalb der Füllhöhe 5 ragt und durch einen Deckel 28 verschlossen ist, der von einem Belüftungsrohr 29 durchgriffen ist, welches im Tauchrohr 24 bis deutlich unterhalb der Füllhöhe 5 reicht.

Wichtig für die Erfindung ist weiterhin eine Dosiereinrichtung 30, die bei diesem Ausführungsbeispiel am Zulauf 4 vorgesehen ist und mit der dosiert Fett oxidierende Bakterien dem zulaufenden Wasser zugesetzt werden können. Vor dieser Dosiereinrichtung 30 mündet ein Frischwasserzufluß 31 in den Zulauf 4. Dieser ist in Abhängigkeit von der Temperatur des dem Behälter 1 zufließenden Abwassers gesteuert und sorgt dafür, daß diese nicht bis in einen die Bakterien schädigenden Bereich ansteigen kann.

Nicht gezeigt ist in der Zeichnung eine Heizung, mit der entweder das zufließende Abwasser oder das Wasser im Behälter 1 beheizt werden kann, damit für die Bakterien optimale Temperaturen herrschen.

Zum Abführen des auf der Oberfläche des Abwassers im Behälter 1 schwimmenden, oxidierten Fettes sind in zumindest einer der beiden Seitenwände Schlitze 32, 33, 34 vorgesehen, die sich unmittelbar oberhalb der Füllhöhe 5 befinden. Für die Kammern 10, 11 genügt ein beiden gemeinsamer Schlitz 33, während die anderen Kammern jeweils einen eigenen Schlitz 32, 34 haben.

Im Betrieb fließt dem Behälter 1 über den Zulauf 4 Abwasser zu. Je nach seinem Anteil an abzuscheidendem Fett werden ihm automatisch mittels der Dosiereinrichtung 30 Bakterien zugeführt. Durch Beimischen von Frischwasser mittels der Frischwasserleitung 31 wird eine unerwünscht hohe Temperatur des Abwassers vermieden. Außerdem gelangt zusätzlicher Sauerstoff in das Abwasser. Das einfließende Abwasser fließt nacheinander über die Durchlässe 13, 14, 15 durch die einzelnen Kammern 9 - 12. Innerhalb der einzelnen Kammern sorgen die Bakterien für eine Oxidation des Fettes. Die Oxidationsprodukte schwimmen dann auf der Oberfläche des Abwassers auf und werden über die Schlitze 32, 33, 34 kontinuierlich oder periodisch abgeführt. Sedimente setzen sich auf dem Boden 2 ab und werden dort kontinuierlich oder über die Domschächte 3 von Zeit zu Zeit entfernt.

Durch das Belüftungsrohr 29 im Tauchrohr 24 vermag auch dann Falschluft in das Tauchrohr 24 zu strömen, wenn der Ablauf 23 bei hohem Wasserdurchlaß vollständig ausgefüllt ist. Dadurch wird verhindert, daß nach dem Winkelheberprinzip das Wasser aus dem Behälter 1 bis zur Eintrittsöffnung 25 des Tauchrohres 24 ausfließen kann.

EP 0 228 520 B1

## Auflistung der verwendeten Bezugszeichen

| | | | | |
|---|---|---|---|---|
| 1 | Behälter | 21 | Trennfläche |
| 2 | Boden | 22 | Abknickung |
| 3 | Domschacht | 23 | Ablauf |
| 4 | Zulauf | 24 | Tauchrohr |
| 5 | Füllhöhe | 25 | Eintrittsöffnung |
| 6 | Trennwand | 26 | Prallscheibe |
| 7 | Trennwand | 27 | Rohrstück |
| 8 | Trennwand | 28 | Deckel |
| 9 | Kammer | 29 | Belüftungsrohr |
| 10 | Kammer | 30 | Dosiereinrichtung |
| 11 | Kammer | 31 | Frischwasserzufluß |
| 12 | Kammer | 32 | Schlitz |
| ~~12~~ | ~~Durchlaß~~ | 33 | Schlitz |
| 13 | Durchlaß | 34 | Schlitz |
| 14 | Durchlaß | | |
| 15 | Durchlaß | | |
| 16 | Schwellwand | | |
| 17 | Schwellwand | | |
| 18 | Schwellwand | | |
| 19 | Trennfläche | | |
| 20 | Trennfläche | | |

## Ansprüche

1. Abscheider für insbesondere Öle und Fette aus Wässern, vorzugsweise Abwässern, welcher eine vom zu behandelnden Wasser durchströmten Behälter (1) mit einem Boden (2) aufweist, der durch Trennwände (6,7, 8) in mehrere, hintereinander angeordnete, über Durchlässe (13, 14, 15) in den Trennwänden (6, 7, 8) miteinander in Verbindung stehende Kammern (9 - 12) aufgeteilt ist, deren erste einen Zulauf (4) und deren letzte einen Ablauf (23) aufweist, dadurch gekennzeichnet , daß der Boden (2) in Durchflußrichtung nach unten geneigt ist und der Zulauf (4) oder die erste Kammer (9) eine Dosiereinrichtung (30) zur dosierten Zugabe von Fette oxidierenden Bakterien hat.

2. Abscheider nach Anspruch 1, dadurch gekennzeichnet , daß die Trennwände (6, 7, 8) durch vom Boden (2) des Behälters (1) aufsteigene Schwellwände (16, 17, 18) und in Strömungsrichtung dahinter angeordnete, von der Füllhöhe (5) bis unterhalb der Oberkante der Schwellwände (16, 17, 18) mit Abstand von den Schwellwänden (16, 17, 18) geführte Trennflächen (19, 20, 21) gebildet sind.

5

3. Abscheider nach den Ansprüchen 1 oder 2, dadurch gekennzeichnet , daß die Durchlässe (13, 14, 15) der Trennwände (6, 7, 8) im unteren Drittel der Trennwände (6, 7, 8) vorgesehen sind.

4. Abscheider nach einem oder mehreren der vorangehenden Ansprüche, dadurch gekennzeichnet , daß die Durchlässe (13, 14, 15) der Trennwände (6, 7, 8) zum Boden (2) des Behälters (1) gerichtet sind.

5. Abscheider nach einem oder mehreren der vorangehenden Ansprüche, dadurch gekennzeichnet , daß der Ablauf (23) eine unter der Füllhöhe (5) vorgesehene Eintrittsöffnung (25) hat.

6. Abscheider nach einem oder mehreren der vorangehenden Ansprüche, dadurch gekennzeichnet , daß der Ablauf (23) ein Tauchrohr (24) aufweist, welches fluchtend mit seinem eintauchenden Rohrstück ein nach oben bis über die Füllhöhe (5) reichendes, durch einen Deckel (28) verschlossenes Rohrstück (27) hat.

7. Abscheider nach einem oder mehreren der vorangehenden Ansprüche, dadurch gekennzeichnet , daß das Tauchrohr (24) mit einem bis unter die Füllhöhe (5) reichenden Belüftungsrohr (29) versehen ist.

8. Abscheider nach einem oder mehreren der vorangehenden Ansprüche, dadurch gekennzeichnet , daß die Unterkante des Zulaufs (4) über der die Füllhöhe (5) bestimmenden Unterkante des Ablaufes (23) angeordnet ist.

9. Abscheider nach einem oder mehreren der vorangehenden Ansprüche, dadurch gekennzeichnet , daß der Behälter (1) mehrere einen Zugang gewährende Domschächte (3) hat.

10. Abscheider nach einem oder mehreren der vorangehenden Ansprüche, dadurch gekennzeichnet , daß die die erste Kammer (9) begrenzende Trennwand (6) mindestens bis zur Unterkante des Zulaufes (4) reicht.

11. Abscheider nach einem oder mehreren der vorangehenden Ansprüche, dadurch gekennzeichnet , daß die auslaßseitige Trennwand (8) mindestens bis über die Oberkante des Ablaufes (23) und damit deutlich über die Füllhöhe (5) des Behälters (1) ragt.

12. Abscheider nach einem oder mehreren der vorangehenden Ansprüche, dadurch gekennzeichnet , daß vor der freien Eintrittsöffnung (25) des Tauchrohres (24) eine diese mit Abstand übergreifende Prallscheibe (26) vorgeordnet ist.

13. Abscheider nach einem oder mehreren der vorangehenden Ansprüche, dadurch gekennzeichnet , daß die einlaßseitige Trennwand (6) eine der zugeordneten Schwellwand (16) vorgeordnete, bis über die Füllhöhe (5) reichende Trennwandfläche (19) hat, welche mit einem unteren, in Strömungsrichtung abgebogenen Abschnitt (22) bis hinter die Schwellwand (16) geführt ist.

14. Abscheider nach einem oder mehreren der vorangehenden Ansprüche, dadurch gekennzeichnet , daß der Zulauf (4) einen Frischwasserzufluß (31) zur dosierten Beimischung von Frischwasser in das zufließende Abwasser hat.

15. Abscheider nach den Ansprüchen 1 oder 2, dadurch gekennzeichnet , daß er eine Beheizung aufweist.


**Claims**

1. Separator, in particular for oils and fats from water, preferably waste water, which has a container (1) permeated by the water to be treated, with a base (2) which is divided by partition walls (6, 7, 8) into several successive chambers (9 - 12) which communicate with one another via orifices (13, 14, 15) in the partition walls (6, 7, 8) and of which the first chamber has an inlet (4) and the last chamber an outlet (23), characterised in that the base (2) is inclined downwardly in the through-flow direction and the inlet (4) or the first chamber (9) has a metering device (30) for the metered addition of fat-oxidising bacteria.

2. Separator according to claim 1, characterised in that the partition walls (6, 7, 8) are formed by threshold walls (16, 17, 18) rising from the base (2) of the container (1) and partition faces (19, 20, 21) which are arranged downstream thereof and are guided at a distance from the threshold walls (16, 17, 18) from the filling level (5) to below the upper edge of the threshold walls (16, 17, 18).

3. Separator according to claims 1 or 2, characterised in that the orifices (13, 14, 15) in the partition walls (6, 7, 8) are provided in the lower third of the partition walls (6, 7, 8).

4. Separator according to one or more of the preceding claims, characterised in that the orifices (13, 14, 15) in the partition walls (6, 7, 8) are directed toward the base (2) of the container (1).

5. Separator according to one or more of the preceding claims, characterised in that the outlet (23) has an inlet opening (25) provided beneath the filling level (5).

6. Separator according to one of more of the preceding claims, characterised in that the outlet (23) comprises an immersion tube (24) having, in alignment with its immersed length of tube, a length of tube (27) which extends upwardly beyond the filling level (5) and is sealed by a cover (28).

7. Separator according to one or more of the preceding claims, characterised in that the immersion tube (24) is provided with a ventilation tube (29) extending below the filling level (5).

8. Separator according to one or more of the preceding claims, characterised in that the lower edge of the inlet (4) is arranged above the lower edge of the outlet (23) defining the filling level (5).

9. Separator according to one or more of the preceding claims, characterised in that the container (1) has several dome shafts (3) allowing access.

10. Separator according to one or more of the preceding claims, characterised in that the partition wall (6) limiting the first chamber (9) extends at least to the lower edge of the inlet (4).

11. Separator according to one or more of the preceding claims, characterised in that the outlet side partition wall (8) extends at least beyond the upper edge of the outlet (23) and therefore well above the filling level (5) of the container (1).

12. Separator according to one or more of the preceding claims, characterised in that, in front of the free inlet opening (25) of the immersion tube (24) there is arranged a deflecting plate (26) covering it at a distance.

13. Separator according to one or more of the preceding claims, characterised in that the inlet side partition wall (6) has a partition wall face (19) which precedes the associated threshold wall (16), extends above the filling level (5) and is guided behind the threshold wall (16) with a lower portion (22) bent in the direction of flow.

14. Separator according to one or more the preceding claims, characterised in that the inlet (4) has a fresh water supply (31) for the metered addition of fresh water to the entering waste water.

15. Separator according to claims 1 or 2, characterised in that it has a heating means.


**Revendications**

1. Séparateur, en particulier pour des huiles et des graisses à partir d'eaux, de préférence d'eaux usées, qui comporte un réservoir (1) traversé par l'eau à traiter avec un fond (2), réservoir qui est divisé par des parois de séparation (6, 7, 8) en plusieurs chambres (9 - 12) disposées l'une derrière l'autre, en communication l'une avec l'autre par des passages (13, 14, 15) dans les parois de séparation (6, 7, 8) la première chambre comportant une entrée ou admission (4) et la dernière une sortie ou décharge (23) caractérisé en ce que le fond (2) est incliné vers le bas dans la direction de circulation du liquide et l'entrée (4) ou la première chambre (9) comporte une installation de dosage (30) pour l'addition dosée de bactéries oxydant les graisses.

**2.** Séparateur selon la revendication 1 caractérisé en ce que les parois de séparation (6, 7, 8) sont formées par des parois-seuils (16, 17, 18) montant à partir du fond (2) du réservoir (1) et des surfaces de séparation (19, 20, 21) disposées en direction de circulation du liquide derrière les parois-seuils et à une certaine distance de ces parois-seuils et allant de la hauteur de remplissage (5) jusqu'à un niveau inférieur au bord supérieur des parois-seuils.

**3.** Séparateur selon les revendications 1 ou 2 caractérisé en ce que les passages (13, 14, 15) des parois de séparation (6, 7, 8) sont prévus dans le tiers inférieur des parois de sépartion (6, 7, 8).

**4.** Séparateur selon une ou plusieurs des revendications précédentes caractérisé en ce que les passages (13, 14, 15) des parois de séparation (6, 7, 8) sont dirigés vers le fond (2) du réservoir (1).

**5.** Séparateur selon une ou plusieurs des revendications précédentes caractérisé en ce que la sortie ou décharge (23) a une ouverture d'entrée prévue en-dessous de la hauteur de remplissage (5).

**6.** Séparateur selon une ou plusieurs des revendications précédentes caractérisé en ce que la sortie ou décharge (23) comporte un tube plongeur (24) qui a une partie tubulaire (27) fermée par un couvercle (28), alignée sur la partie tubulaire plongée dans le liquide et allant vers le haut au-delà du niveau de remplissage (5).

**7.** Séparateur selon une ou plusieurs des revendications précédentes caractérisé en ce que le tube plongeur (24) est muni d'un tube d'aération (29) allant jusqu'à un niveau inférieur à la hauteur de remplissage (5).

**8.** Séparateur selon une ou plusieurs des revendications précédentes caractérisé en ce que le bord inférieur de l'entrée ou admission (4) est disposé au-dessus du bord inférieur de la sortie ou décharge (23) déterminant la hauteur de remplissage (5).

**9.** Séparateur selon une ou plusieurs des revendications précédentes caractérisé en ce que le réservoir (1) comporte plusieurs puits à dôme (3) assurant un accès.

**10.** Séparateur selon une ou plusieurs des revendications précédentes caractérisé en ce que la paroi de séparation (6) limitant la première chambre (9) va au moins jusqu'au bord inférieur de l'entrée ou admission (4).

**11.** Séparateur selon une ou plusieurs des revendications précédentes caractérisé en ce que la paroi de séparation (8) du côté de la sortie fait saillie au moins jusqu'à un niveau au-dessus du bord supérieur de la sortie (23) et ainsi nettement au-dessus de la hauteur de remplissage (5) du réservoir (1).

**12.** Séparateur selon une ou plusieurs des revendications précédentes caractérisé en ce que l'on prévoit un disque de rebondissement (26) devant l'ouverture d'entrée libre (25) du tube plongeur (24), disque qui recouvre l'ouverture d'entrée à une certaine distance de celle-ci.

**13.** Séparateur selon une ou plusieurs des revendications précédentes caractérisé en ce que la paroi de séparation (6) du côté entrée comporte une surface de paroi de séparation (19) disposée avant la paroi-seuil associée (16) et allant jusqu'à un niveau supérieur à la hauteur de remplissage (5) et amenant par une partie inférieure (22) recourbée en direction de circulation du liquide jusque derrière la paroi-seuil (16).

**14.** Séparateur selon une ou plusieurs des revendications précédentes caractérisé en ce que l'entrée (4) comporte une admission d'eau fraiche (31) pour le mélange dosé d'eau fraiche à l'eau usée entrante.

**15.** Séparateur selon les revendications 1 ou 2 caractérisé en ce qu' il comporte un chauffage.

EP 0 228 520 B1